# EUROPÄISCHE PATENTSCHRIFT

(11) **EP 3 391 002 B1**
(45) Veröffentlichungstag und Bekanntmachung des Hinweises auf die Patenterteilung: **08.01.2020**
(21) Anmeldenummer: 16795108.6
(22) Anmeldetag: 15.11.2016
(51) Int. Cl.: G01L 19/00, G01L 19/04, G01K 7/04, G01L 9/00, G01L 19/02

(54) **KERAMISCHE DRUCKMESSZELLE MIT MINDESTENS EINEM TEMPERATURMESSWANDLER UND DRUCKMESSAUFNEHMER MIT EINER SOLCHEN DRUCKMESSZELLE**
CERAMIC PRESSURE MEASUREMENT CELL HAVING AT LEAST ONE TEMPERATURE TRANSDUCER AND PRESSURE SENSOR HAVING A PRESSURE MEASUREMENT CELL OF THIS TYPE
CELLULE DE MESURE DE PRESSION CÉRAMIQUE COMPRENANT AU MOINS UN TRANSDUCTEUR DE TEMPÉRATURE ET CAPTEUR DE PRESSION COMPRENANT UNE TELLE CELLULE DE MESURE DE PRESSION

(30) Priorität: 18.12.2015 DE 102015122220
(43) Veröffentlichungstag der Anmeldung: 24.10.2018
(73) Patentinhaber: Endress+Hauser SE+Co. KG, 79689 Maulburg (DE)
(72) Erfinder: ROSSBERG, Andreas, 79713 Bad Säckingen (DE); PONATH, Nils, 79539 Lörrach (DE); SCHLEIFERBÖCK, Jan, 79595 Rümmingen (DE); UEHLIN, Thomas, 79650 Schopfheim (DE)
(74) Vertreter: Andres, Angelika Maria
(86) Internationale Anmeldenummer: PCT/EP2016/077745
(87) Internationale Veröffentlichungsnummer: WO 2017/102217

(56) Entgegenhaltungen:
- DE-A1- 10 044 078
- DE-A1-102013 106 045
- US-A- 4 141 252
- US-A1- 2012 174 681

## Beschreibung

Die vorliegende Erfindung betrifft eine keramische Druckmesszelle mit mindestens einem Temperaturmesswandler und einen Druckmessaufnehmer mit einer solchen Druckmesszelle.

Temperaturmesswandler bzw. Temperatursensoren sind häufig in Druckmesszellen integriert, um den statischen Temperaturfehler bei der Druckmessung zu kompensieren. Bei gattungsgemäßen Druckmesszellen ist dieser Temperatursensor meistens auf der Rückseite der Keramik angeordnet, er kann aber auch in einer anschließenden Auswerteelektronik enthalten sein. Wenn sich eine Druckmesszelle in thermischem Gleichgewicht mit ihrer Umgebung befindet, kann die Temperaturabhängigkeit der Druckmessung mit Hilfe eines solchen Temperatursensors und einer geeigneten Aufbereitung des Messsignals gut kompensiert werden. Temperatursprünge können jedoch zu erheblichen Messfehlern führen, die mit den bekannten Verfahren kaum zu kompensieren sind. Insbesondere bei keramischen Druckmesszellen mit einer dünnen Messmembran, die an einem Gegenkörper befestigt sind, und die eine mit einer Stärke von beispielsweise wenigen 100 µm, bei einer medienberührenden Oberfläche von etwa 1 cm² bis 10 cm² aufweisen, folgt die Temperatur der Messmembran beliebig schnell der Temperatur eines an der Messmembran anstehenden Mediums, während der Wärmeübertrag zwischen der Frontseite und der Rückseite des Gegenkörpers nur sehr langsam folgt. Dies führt zu Temperaturgradienten und damit einhergehenden mechanischen Spannungen, welche die Druckmessung beeinträchtigen.

Die Offenlegungsschrift DE 100 44 078 A1 offenbart eine Druckmesszelle mit zwei resistiven Temperatursensoren, die in Richtung eines erwarteten Temperaturgradienten beabstandet anzuordnen sind. Deshalb ist der erste Temperatursensor an der die Vorderseite der Druckmesszelle bildenden Messmembran, wo er Temperaturänderungen des Mediums schnell zu folgen vermag, und der zweite ist an der von der Messmembran abgewandten Rückseite des Gegenkörpers der Druckmesszelle angeordnet.

Die Offenlegungsschrift DE 10 2013 114 734 A1 offenbart eine Druckmesszelle, bei welcher die Temperatur der Messmembran über die Impedanz einer Messmembranelektrode ermittelt wird. Dies ermöglicht zweifellos die schnellste Detektion einer Temperaturänderung. Ist aber mit größerem Auswertungsaufwand verbunden.

Es ist die Aufgabe der vorliegenden Erfindung, eine Druckmesszelle und einen Druckmessaufnehmer mit einer einfachen und zuverlässigen Detektion von Temperaturgradienten bereitzustellen.

Die Aufgabe wird erfindungsgemäß gelöst durch die Druckmessszelle gemäß dem unabhängigen Patentanspruch 1 und den Druckmessaufnehmer gemäß dem Patentanspruch 16.

Die erfindungsgemaße Druckmesszelle umfasst einen keramischen Gegenkörper; eine keramische Messmembran, die mit dem Gegenkörper unter Bildung einer Messkammer zwischen dem Gegenkörper und der Messmembran mittels einer umlaufenden Fügestelle druckdicht gefügt ist, wobei die Messmembran durch einen zu messenden Druck verformbar ist; einen kapazitiven Wandler zum Wandeln einer druckabhängigen Verformung der Messmembran in ein elektrisches Signal; und einen Temperaturmesswandler zum Bereitstellen mindestens eines von einer Temperatur oder einem Temperaturgradienten der Druckmesszelle abhängigen elektrischen Signals, dadurch gekennzeichnet, dass der Temperaturmesswandler mindestens ein erstes Thermoelement umfasst, das einen galvanischen Kontakt zwischen einem ersten Leiter, der ein erstes elektrisch leitendes Material umfasst, und einem zweiten Leiter der mindestens ein zweites elektrisch leitendes Material umfasst, aufweist, wobei der Gegenkörper eine erste Materialstärke (hg) aufweist, wobei der galvanische Kontakt zwischen dem ersten Leiter und dem zweiten Leiter nicht mehr als 25% insbesondere nicht mehr als 10% und bevorzugt nicht mehr als 5% der ersten Materialstärke von einer dem Gegenkörper zugewandten Oberfläche der Messmembran beabstandet ist und/oder wobei die Fügestelle eine zweite Materialstärke (hf) aufweist, wobei der galvanische Kontakt zwischen dem ersten Leiter und dem zweiten Leiter nicht mehr als das Zehnfache der zweiten Materialstärke, beispielsweise nicht mehr als das Vierfache der zweiten Materialstärke insbesondere nicht mehr als das Doppelte der zweiten Materialstärke und bevorzugt nicht mehr als eine zweite Materialstärke der Fügestelle von einer dem Gegenkörper zugewandten Oberfläche der Messmembran beabstandet ist.

Die Anordnung des ersten Thermoelements nahe der Messmembran gewährleistet eine schnelle Registrierung von Temperatursprüngen, die insbesondere bei wechselnden Medientemperaturen in einer Prozessanlage auftreten können.

In einer Weiterbildung der Erfindung weist der Temperaturmesswandler weiterhin mindestens ein zweites Thermoelement auf mit einem galvanischen Kontakt zwischen dem ersten Leiter und einem dritten Leiter, der mindestens ein drittes elektrisch leitendes Material umfasst.

Diese Anordnung ermöglicht das Messen einer zweiten Temperatur oder, wenn das erste Thermoelement und das zweite Thermoelement in Reihe geschaltet sind, die direkte Messung eines Temperaturgradienten. Insbesondere die zweite Alternative erleichtert es Druckmessfehler aufgrund von Temperaturgradienten zu korrigieren.

Druckmesszelle nach einem der vorhergehenden Ansprüche wobei das erste Material ausgewählt ist aus einer Liste, welche die folgenden Materialien umfasst: Metalle, metallische Legierungen, Metall-Chalkogenide, Metalloxide, insbesondere unterstöchiometrische Metalloxide, Si-Verbindungen, insbesondere CuNi, NiV, Ti, TiW, TiBN(N2), TiTiN(N2), ZrNiTi, Ta/TaO, PtCu, Ta/TaO, TiOx, PbTe(SrTe)4Na2, Bi2Te3-Sb2Te3, Cu(2-x)Se, SrTiO3, SiGe.

In einer Weiterbildung der Erfindung weist das erste Material gegenüber Pt einen Seebeck-Koeffizienten auf, dessen Betrag nicht weniger als 2 µV/K, insbesondere nicht weniger als 4 µV/K, bevorzugt nicht weniger als 8 µV/K, weiter bevorzugt nicht weniger als 16 µV/K und besonders bevorzugt nicht weniger als 64 µV/K beträgt

In einer Weiterbildung der Erfindung weist die Differenz zwischen dem Seebeck-Koeffizienten des ersten Materials und dem Seebeck-Koeffizienten des zweiten Materials einen Betrag auf, der nicht weniger als 2 µV/K, insbesondere nicht weniger als 4 µV/K, bevorzugt nicht weniger als 8 µV/K, weiter bevorzugt nicht weniger als 16 µV/K und besonders bevorzugt nicht weniger als 64 µV/K beträgt.

In einer Weiterbildung der Erfindung, weist der zweite Leiter mehrere Abschnitte unterschiedlicher elektrisch leitender Materialien auf, wobei vorzugsweise der Betrag der Differenz zwischen den Seebeck-Koeffizienten der jeweils benachbarten elektrisch leitenden Materialen des zweiten Leiters nicht mehr als die Hälfte, insbesondere nicht mehr als ein Viertel, und bevorzugt nicht mehr als ein Zehntel des Betrags der Differenz zwischen dem Seebeck-Koeffizienten des ersten Materials und dem Seebeck-Koeffizienten des zweiten Materials beträgt, und/oder
wobei der dritte Leiter mehrere Abschnitte unterschiedlicher elektrisch leitender Materialien aufweist, wobei vorzugsweise der Betrag der Differenz zwischen den Seebeck-Koeffizienten der elektrisch leitenden Materialen des dritten Leiters nicht mehr als die Hälfte, insbesondere nicht mehr als ein Viertel, und bevorzugt nicht mehr als ein Zehntel des Betrags der Differenz zwischen dem Seebeck-Koeffizienten des ersten Materials und dem Seebeck-Koeffizienten des dritten Materials beträgt.

In einer Weiterbildung der Erfindung weist die Fügestelle das zweite elektrisch leitende Material auf, welches das elektrisch leitende Material des ersten Leiters kontaktiert, wobei da zweite elektrisch leitende Material insbesondere ein Aktivhartlot, beispielsweise eine Zr-Ni-Ti-Legierung umfasst, wobei der zweite Leiter die Fügestelle und einen Leitungsabschnitt zur Rückseite des Gegenkörpers umfasst, sei es eine Schirmung an der Mantelfläche des Gegenkörpers oder eine elektrische Durchführung im Gegenkörper. Diese Weiterbildung ist insofern vorteilhaft, weil Temperatursprünge im Medium über die Fügestelle in den Gegenkörper gelangen und mit einem Thermoelement, welches die Fügestelle umfasst, am schnellsten zu detektieren sind.

In einer Weiterbildung der Erfindung weist der Gegenkörper eine membranseitige Stirnfläche, eine der Messmembran abgewandte, rückseitige Stirnfläche auf, die voneinander einen axialen Abstand (a) aufweisen wobei der erste Leiter sich über mindestens 80% insbesondere mindestens 90%, bevorzugt mindestens 95% und besonders bevorzugt über 100% des axialen Abstands (a) erstreckt. Da ein Temperaturgradient nach einem Temperatursprung insbesondere in axialer Richtung verläuft, ist der hier spezifizierte axiale Abstand vorteilhaft, um den Temperaturgradienten mit hinreichender Genauigkeit bestimmen zu können.

In einer Weiterbildung der Erfindung verläuft der erste Leiter entlang einer Mantelfläche des Gegenkörpers die sich zwischen der membranseitigen Stirnfläche und der rückseitigen Stirnfläche erstreckt. Vorteilhafter Weise ist der galvanische Kontakt des ersten Thermoelements an einer Mantelfläche des Gegenkörpers angeordnet.

In einer Weiterbildung der Erfindung weist der Gegenkörper eine durchgehende Bohrung oder ein Sackloch zwischen der membranseitigen Stirnfläche und der rückseitigen Stirnfläche auf, wobei der erste Leiter in der Bohrung oder dem Sackloch verläuft.

In einer Weiterbildung der Erfindung ist der galvanische Kontakt des ersten Thermoelements an einer der Messmembran zugewandten Oberfläche des Gegenkörpers angeordnet, wobei insbesondere die der Messmembran zugewandte Oberfläche des Gegenkörpers einen Radius aufweist, wobei der galvanische Kontakt nicht mehr als ein Fünftel des Radius insbesondere nicht mehr als ein Zehntel des Radius von der Mantelfläche des Gegenkörpers beabstandet ist.

In einer Weiterbildung der Erfindung ist das zweite Thermoelement nicht mehr als 20% insbesondere nicht mehr als 10%, bevorzugt nicht mehr 5% des axialen Abstands von der rückseitigen Stirnfläche beabstandet und bevorzugt auf der rückseitigen Stirnfläche angeordnet.

In einer Weiterbildung der Erfindung weist der kapazitive Wandler eine an der Messmembran angeordnete Membranelektrode (7) und mindestens eine an der membranseitigen Stirnfläche des Gegenkörper (2) angeordnete Gegenkörperelektrode (8, 9) auf, wobei die Kapazität zwischen der Membranelektrode (7) und der Gegenkörperelektrode (8, 9) von einer druckabhängigen Verformung der Messmembran abhängt, wobei die Gegenkörperelektrode das erste oder das zweite Material aufweist.

In einer Weiterbildung der Erfindung ist zumindest ein Leiter des ersten und/ oder zweiten Thermoelements auf dem Gegenkörper abgeschieden, insbesondere durch Sputtern.

Der erfindungsgemäße Druckmessaufnehmer, umfasst: eine Druckmesszelle nach einem der vorhergehenden Ansprüche; und ein Gehäuse, wobei das Gehäuse in seinem Innern eine Messzellenkammer aufweist, in welcher die Druckmesszelle angeordnet ist, wobei das Gehäuse eine Medienöffnung aufweist, wobei die die Messmembran der Medienöffnung zugewandt und über die Medienöffnung mit einem Medium dessen Druck zu messen ist, beaufschlagbar ist.

In einer Weiterbildung, welche nicht Teil der Erfindung ist, ist die Medienöffnung von einem ringförmigen Dichtungssitz umgeben, wobei zwischen dem Dichtungssitz und der Druckmesszelle ein Dichtungsring angeordnet ist, wobei die Druckmesszelle mittels Spannvorrichtung gegen den Dichtungsring in axialer Richtung eingespannt ist.

Der erfindungsgemäße Druckmessaufnehmer ist beispielsweise so beschaffen, dass nach einem Temperatursprung eines flüssigen Mediums von mindestens +80 K, vor dem das Medium eine Ausgangstemperatur Temperatur von 300 K +/- 10 K aufwies, und sich der Druckmessaufnehmer mit dem Medium und der Umgebung im thermischen Gleichgewicht befand, der Gegenkörper eine inhomogene Temperaturverteilung mit Orten maximaler Temperatur und minimaler Temperatur aufweist, wobei das erste Thermoelement und das zweite Thermoelement so angeordnet sind, dass über eine Zeitspanne von 60 Sekunden bis 600 Sekunden, insbesondere von 30 Sekunden bis 600 Sekunden, und bevorzugt von 15 Sekunden bis 600 Sekunden nach dem Temperatursprung die Differenz zwischen einer aktuellen ersten Temperatur am Ort des galvanischen Kontakts des ersten Thermoelements und einer aktuellen zweiten Temperatur am Ort des galvanischen Kontakts des zweiten Thermoelements nicht weniger als 20%, insbesondere nicht weniger als 40%, und bevorzugt nicht weniger als 50% der Differenz zwischen der aktuellen maximalen Temperatur und der aktuellen minimalen Temperatur beträgt.

Der erfindungsgemäße Druckmessaufnehmer ist beispielsweise so beschaffen, dass nach einem Temperatursprung eines flüssigen Mediums von mindestens +80 K, vor dem das Medium eine Ausgangstemperatur Temperatur von 300 K +/- 10 K aufwies, und sich der Druckmessaufnehmer mit dem Medium und der Umgebung im thermischen Gleichgewicht befand, der Gegenkörper eine inhomogene Temperaturverteilung mit Orten maximaler Temperatur und minimaler Temperatur aufweist, wobei das erste Thermoelement so angeordnet ist, dass über eine Zeitspanne von 60 Sekunden bis 600 Sekunden, insbesondere von 30 Sekunden bis 600 Sekunden, und bevorzugt von 15 Sekunden bis 600 Sekunden nach dem Temperatursprung der Betrag der Differenz zwischen der aktuellen maximalen Temperatur und einer aktuellen ersten Temperatur am Ort des galvanischen Kontakts des ersten Thermoelements nicht mehr als 50%, insbesondere nicht mehr als 40%, und bevorzugt nicht mehr als 20% der Differenz zwischen der aktuellen maximalen Temperatur und der aktuellen minimalen Temperatur beträgt.

Die Erfindung wird nun anhand der in den Zeichnungen dargestellten Ausführungsbeispiele näher erläutert. Es zeigt:
Fig. 1a: einen Längsschnitt durch ein erstes Ausführungsbeispiel einer erfindungsgemäßen Druckmesszelle;
Fig. 1b: eine Aufsicht auf eine membranseitige Stirnseite eines Gegenkörpers des Ausführungsbeispiels aus Fig. 1a;
Fig. 2a: einen Längsschnitt durch ein zweites Ausführungsbeispiel einer erfindungsgemäßen Druckmesszelle;
Fig. 2b: eine Aufsicht auf eine membranseitige Stirnseite eines Gegenkörpers des Ausführungsbeispiels aus Fig. 2a;
Fig. 2c: eine Aufsicht auf eine der Membran abgewandte Stirnseite eines Gegenkörpers des Ausführungsbeispiels aus Fig. 2a;
Fig. 3a: einen Längsschnitt durch ein drittes Ausführungsbeispiel einer erfindungsgemäßen Druckmesszelle;
Fig. 3b: eine Aufsicht auf eine membranseitige Stirnseite eines Gegenkörpers des Ausführungsbeispiels aus Fig. 3a;
Fig. 4 einen schematischen Längsschnitt durch ein Ausführungsbeispiel eines erfindungsgemäßen Druckmessaufnehmers; und
Fig. 5 das Drucksignal des Drucknullpunkts bei Temperatursprüngen ohne und mit Kompensation des Temperaturgradienten.

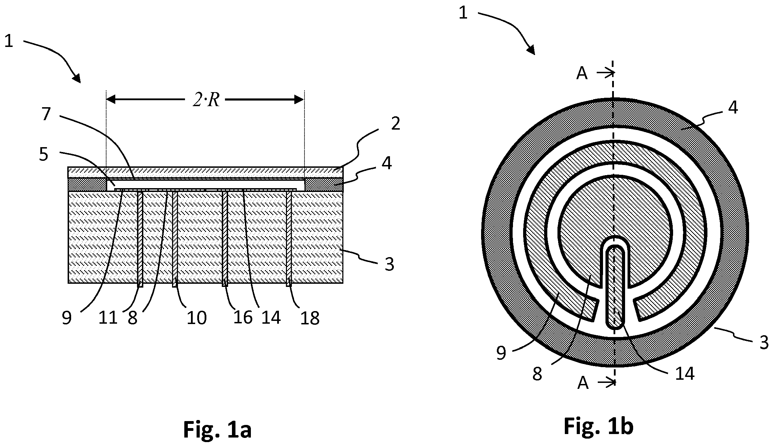

Ein in Fign. 1a und 1b dargestelltes Ausführungsbeispiel einer erfindungsgemäßen Druckmesszelle 1 umfasst eine kreisscheibenförmige, keramische Messmembran 2, die mit einem erheblich steiferen kreisplattenförmigen, keramischen Gegenkörper 3 entlang einer umlaufenden Fügestelle 4 unter Bildung einer Messkammer 5 zwischen dem Gegenkörper 3 und der Messmembran 2 druckdicht gefügt ist. Die Messmembran 2 und der Gegenkörper weisen insbesondere Korund auf. Die Fügestelle kann insbesondere ein Aktivhartlot, beispielsweise ein Zr-Ni-Ti-Aktivhartlot, aufweisen.

Die Messmembran 2 weist auf ihrer gegenkörperseitigen Oberfläche eine vollflächige Membranelektrode 7 mit einem Radius R auf, wobei R der Radius des auslenkbaren Bereichs der Messmembran ist, der dem Innenradius der Fügestelle 4 entspricht. Auf einer membranseitigen Stirnfläche des Gegenkörpers 3 ist eine zentrale, Messelektrode 8 angeordnet, die von einer Referenzelektrode 9 abschnittsweise umgeben ist. Der Abstand der Referenzelektrode 9 zur Messelektrode 8 und zur Fügestelle 4 beträgt jeweils etwa 0,1 R. Die Referenzelektrode 9 und die Messelektrode 8 sind über metallische Durchführungen 10, 11 durch den Grundkörper elektrisch kontaktiert. Die Membranelektrode 7 kann beispielsweise über die Fügestelle auf Schaltungsmasse gelegt sein. Zum Bestimmen eines Druckmesswerts werden die Kapazitäten zwischen der Messelektrode 8 und der Membranelektrode 7 einerseits, sowie der Referenzelektrode 9 und der Membranelektrode 7 andererseits erfasst. Wenn die Kapazitäten der Messelektrode und der Referenzelektrode gegenüber der Membranelektrode jeweils gleich sind, wenn in der Messkammer und auf der der Messkammer abgewandten Außenseite der Messmembran der gleiche Druck herrscht, dann kann der zumessende Druck anhand eines Differenzsignals der Kapazitäten einfach bestimmt werden. Einzelheiten zur Bestimmung eines Druckmesswerts anhand der Kapazitäten ist an sich bekannt und beispielsweise der Offenlegungsschrift DE 10 2011 078 557 A1 beschrieben.

Zur Bestimmung einer Temperatur bzw. eines Temperaturgradienten an der membranseitigen Stirnfläche des Gegenkörpers 3 weist die Druckmesszelle 1 einen Temperaturmesswandler mit zwei Thermoelementen auf. Die beiden Thermoelemente umfassen als gemeinsamen ersten Leiter 14 einen Streifen TiO₂₋ₓ der beispielsweise mittels eines Sputter-Prozesses auf der membranseitigen Stirnfläche des Gegenkörpers 3 abgeschieden ist. Der erste Leiter ist gegenüber der Messelektrode 8, der Referenzelektrode 9 und der Fügestelle 4 elektrisch isoliert und erstreckt sich in radialer Richtung von einer ersten Position im Randbereich der Messkammer zu einer zweiten, zentrumsnahen Position. Einzelheiten zur Kontaktierung des ersten Leiters 14 sind insbesondere in Fig. 1a dargestellt, die einen Längsschnitt entlang der Linie A-A in Fig. 1b zeigt.

Ein erstes der beiden Thermoelemente umfasst weiterhin einen ersten Ta-Stift 18 als zweiten Leiter, welcher durch eine axiale Bohrung von einer rückseitige Stirnfläche des Gegenkörpers 3 zur ersten Position an der membranseitigen Stirnfläche des Gegenkörpers geführt ist und dort den ersten Leiter 14 kontaktiert.

Ein zweites der beiden Thermoelemente umfasst weiterhin einen zweiten Ta-Stift 16 als zweiten Leiter, welcher durch eine axiale Bohrung von einer rückseitige Stirnfläche des Gegenkörpers 3 zur zweiten Position an der membranseitigen Stirnfläche des Gegenkörpers geführt ist und dort den ersten Leiter 14 kontaktiert.

Temperatursprünge im Medium, wie sie insbesondere aufgrund von SIP-Prozessen auftreten, werden von der Messmembran 2 über die Fügestelle 4 in den Gegenkörper der 3 der Druckmesszelle eingeleitet. Dies führt zu Temperaturgradienten zwischen der ersten Position des ersten Leiters 14 und der zweiten Position des ersten Leiters. Daher entstehen zu den beiden Ta-Stiften an der ersten bzw. zweiten Position unterschiedliche Thermospannungen, deren Differenz an der rückseitigen Stirnfläche zwischen dem ersten Ta-Stift 18 und dem zweiten Ta-Stift 16 abzugreifen ist.

In einer hier nicht dargestellten, alternativen Ausgestaltung dieses Ausführungsbeispiels kann auf den ersten Ta-Stift 18 verzichtet werden, wenn der erste Leiter bis an die Fügestelle 4 herangeführt ist und diese galvanisch kontaktiert. Die Außenseite bzw. Mantelfläche der Fügestelle 4 ist dann mit einer metallischen Beschichtung kontaktiert, die sich über die Mantelfläche des Gegenkörpers 3 zur rückseitigen Stirnfläche erstreckt. Ein Signal, das von der Temperaturdifferenz zwischen der ersten Position des ersten Leiters am Rand der Messkammer und der zweiten Position des ersten Leiters in einem zentralen Bereich der membranseitigen Stirnfläche des Gegenkörpers abhängt, ist an der rückseitigen Stirnfläche zwischen der metallischen Beschichtung und dem zweiten Ta-Stift 16 abzugreifen. Voraussetzung hierfür ist, dass das Material des ersten Leiters einen erheblich größeren Seebeck-Koeffizienten aufweist als das Material der Fügestelle und das Material der metallischen Beschichtung.

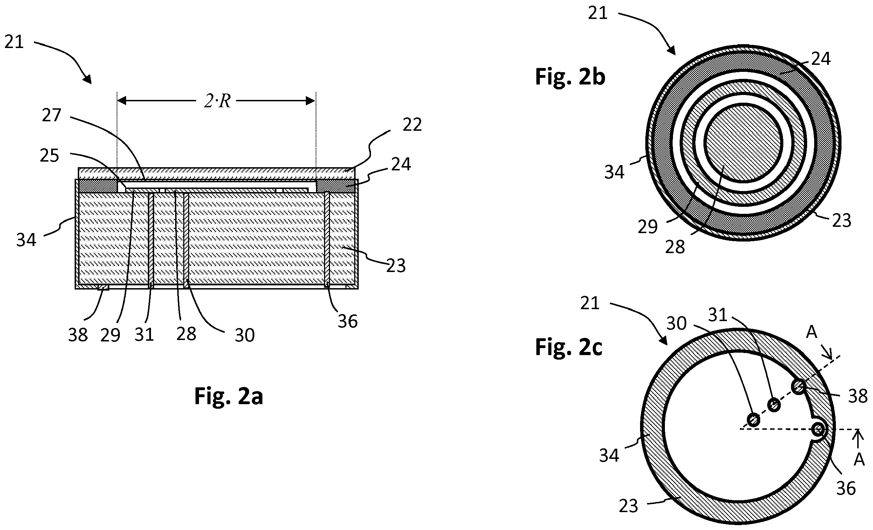

Das in Fign. 2a bis 2c dargestellte zweite Ausführungsbeispiel einer erfindungsgemäßen Druckmesszelle 21 umfasst eine kreisscheibenförmige, keramische Messmembran 22, die mit einem erheblich steiferen kreisplattenförmigen, keramischen Gegenkörper 23 entlang einer umlaufenden Fügestelle 24 unter Bildung einer Messkammer 25 zwischen dem Gegenkörper 23 und der Messmembran 22 druckdicht gefügt ist. Die Messmembran 22 und der Gegenkörper 23 weisen insbesondere Korund auf. Die Fügestelle umfasst ein Aktivhartlot, beispielsweise Zr-Ni-Ti.

Die Messmembran 22 weist auf ihrer gegenkörperseitigen Oberfläche eine vollflächige Membranelektrode 27. Auf einer membranseitigen Stirnfläche des Gegenkörpers 23 ist eine zentrale Messelektrode 28 angeordnet, die von einer Referenzelektrode 29 ringförmig umgeben ist. Die Referenzelektrode 29 und die Messelektrode 28 sind über metallische Durchführungen 30, 31 durch den Gegenkörper elektrisch kontaktiert. Die Membranelektrode 27 ist über die Fügestelle auf Schaltungsmasse gelegt. Zum Bestimmen eines Druckmesswerts werden die Kapazitäten bestimmt und ausgewertet, wie im Zusammenhang des ersten Ausführungsbeispiels erläutert wurde.

Zur Bestimmung einer Temperatur bzw. eines Temperaturgradienten an der membranseitigen Stirnfläche des Gegenkörpers 23 weist die Druckmesszelle 21 einen Temperaturmesswandler mit zwei Thermoelementen auf. Die beiden Thermoelemente umfassen als gemeinsamen ersten Leiter 34 eine Beschichtung an der Mantelfläche mit ersten Material, welches einen hinreichend großen Seebeck-Koeffizienten aufweist, beispielsweise TiO₂₋ₓ, NiV, oder CuNi das mittels eines Sputter-Prozesses abgeschieden ist. Der erste Leiter 34 ist im galvanischen Kontakt mit der Mantelfläche der Fügestelle 24, welche einen zweiten Leiter in Gestalt des Aktivhartlots aufweist, so dass an diesem Kontakt das erste Thermoelement des Temperaturmesswandlers gebildet ist. Die Schicht des ersten Leiters 34 erstreckt sich bis zur rückseitigen Stirnfläche des Gegenkörpers 23. Hier steht der erste Leiter 34 mit einem zweiten Leiter in Form eines metallischen Kontaktpad 38 im galvanischen Kontakt, wodurch das zweite Themoelement des Temperaturmesswandlers gebildet wird. Um das Potential des ersten Thermoelements abgreifen zu können, erstreckt sich ein Ta-Stift 36 durch den Gegenkörper 23 und kontaktiert die Fügestelle 24.

Einzelheiten zur Kontaktierung des ersten Leiters 14 sind insbesondere in Fig. 2a dargestellt, die einen Längsschnitt entlang der Linie A-A in Fig. 2c zeigt.

Die Differenz zwischen den Thermospannungen des ersten und zweiten Thermoelements ist zwischen dem Ta-Stift 36 und dem Kontaktpad 38 abzugreifen.

Im zweiten Ausführungsbeispiel ist der erste Leiter 34 als vollflächige Beschichtung der Mantelfläche des Gegenkörpers dargestellt, so dass diese Beschichtung, wenn sie noch eine hinreichend gute Leitfähigkeit aufweist, zugleich als Schirmung der Messelektrode 28 und der Referenzelektrode 30 dienen kann.

Sollte der spezifische Widerstand des ersten Leiters zu groß sein, um noch als Schirmung zu dienen, kann auf dem ersten Leiter im axialen Bereich der Mantelfläche des noch eine Isolatorschicht abgeschieden werden (beispielsweise SiO2), auf der dann eine metallische Schirmschicht abzuscheiden ist, welche die Fügestelle bzw. den ersten Leiter im Bereich der Fügestelle kontaktiert. In diesem Fall ist es nicht erforderlich, dass der erste Leiter die gesamte Mantelfläche des Gegenkörpers bedeckt. Es reicht, wenn sich ein Streifen von der Fügestelle in axialer Richtung bis zu dem Kontaktpad an der Rückseite des Gegenkörpers erstreckt.

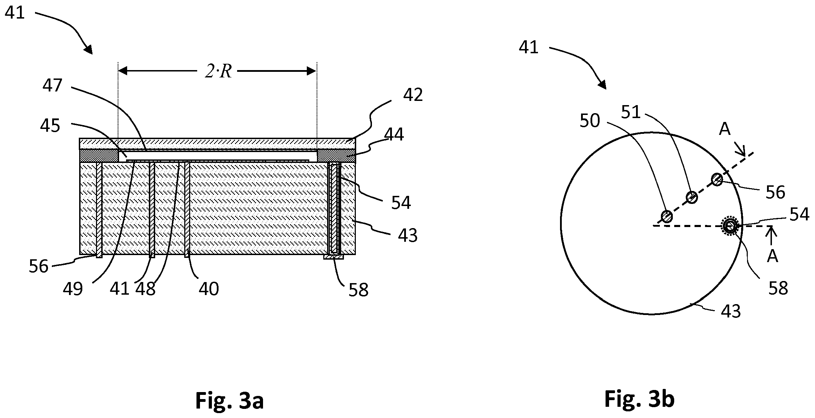

Das in Fign. 3a und 3b dargestellte dritte Ausführungsbeispiel einer erfindungsgemäßen Druckmesszelle 41 umfasst eine kreisscheibenförmige, keramische Messmembran 42, die mit einem erheblich steiferen kreisplattenförmigen, keramischen Gegenkörper 43 entlang einer umlaufenden Fügestelle 44 unter Bildung einer Messkammer 45 zwischen dem Gegenkörper 43 und der Messmembran 42 druckdicht gefügt ist. Die Messmembran 42 und der Gegenkörper 43 weisen insbesondere Korund auf. Die Fügestelle umfasst ein Aktivhartlot, beispielsweise Zr-Ni-Ti.

Die Messmembran 42 weist auf ihrer gegenkörperseitigen Oberfläche eine vollflächige Membranelektrode 47 auf. Auf einer membranseitigen Stirnfläche des Gegenkörpers 43 ist eine zentrale Messelektrode 48 angeordnet, die von einer Referenzelektrode 49 ringförmig umgeben ist. Die Referenzelektrode 49 und die Messelektrode 48 sind über metallische Durchführungen 50, 51 durch den Gegenkörper elektrisch kontaktiert. Die Membranelektrode 47 ist über die Fügestelle auf Schaltungsmasse gelegt. Zum Bestimmen eines Druckmesswerts werden die Kapazitäten bestimmt und ausgewertet, wie im Zusammenhang des ersten Ausführungsbeispiels erläutert wurde.

Zur Bestimmung einer Temperatur bzw. eines Temperaturgradienten an der membranseitigen Stirnfläche des Gegenkörpers 43 weist die Druckmesszelle 41 einen Temperaturmesswandler mit zwei Thermoelementen auf. Die beiden Thermoelemente umfassen einen gemeinsamen ersten Leiter in Form einer Beschichtung 54 an der Mantelfläche und den Stirnseiten eines Korund-Stiftes mit einem ersten Material, welches einen hinreichend großen Seebeck-Koeffizienten aufweist, beispielsweise TiO_{2-X}, das mittels eines Sputter-Prozesses abgeschieden ist. Der Korund-Stift ist in eine durchgehende axiale Bohrung durch den Gegenkörper eingesetzt, so dass die Beschichtung 54 im galvanischen Kontakt mit der Unterseite der Fügestelle 44, wo die axiale Bohrung durch den Gegenkörper austritt. Vorzugsweise ist der Keramik-Stift durch den gleichen Fügeprozess, in dem Messmembran mit dem Gegenkörper gefügt wird, an der Fügestelle gefügt. Wodurch der galvanische Kontakt zwischen der Fügestelle 44 und der Beschichtung 54, durch den das erste Thermoelement gebildet wird, zuverlässig gesichert ist.

An einer der Membran abgewandten Rückseite des Gegenkörpers 43 wird zweiter galvanischer Kontakt zur ersten Beschichtung 54 auf dem Korund-Stift mittels eines aufgelöteten Kontaktpads 58 gebildet, wodurch das zweite Thermoelement des Temperaturmesswandlers realisiert ist. Um das Potential des ersten Thermoelements abgreifen zu können, erstreckt sich ein Ta-Stift 56 durch den Gegenkörper 43 und kontaktiert die Fügestelle 44.

Einzelheiten zur Kontaktierung des ersten Leiters 54 sind insbesondere in Fig. 3a dargestellt, die einen Längsschnitt entlang der Linie A-A in Fig. 3b zeigt.

Die Differenz zwischen den Thermospannungen des ersten und zweiten Thermoelements ist zwischen dem Ta-Stift 56 und dem Kontaktpad 58 abzugreifen.

In einer hier nicht dargestellten, alternativen Ausgestaltung dieses Ausführungsbeispiels kann auf den Ta-Stift 56 verzichtet werden, wenn die Außenseite bzw. Mantelfläche der Fügestelle 4 mit einer metallischen Beschichtung kontaktiert ist, die sich über die Mantelfläche des Gegenkörpers 43 zur rückseitigen Stirnfläche erstreckt. Ein Signal, das von der Temperaturdifferenz zwischen den beiden Thermoelementen abhängt, ist dann an der rückseitigen Stirnfläche zwischen der metallischen Beschichtung und dem zweiten Ta-Stift Kontaktpad 58 abzugreifen.

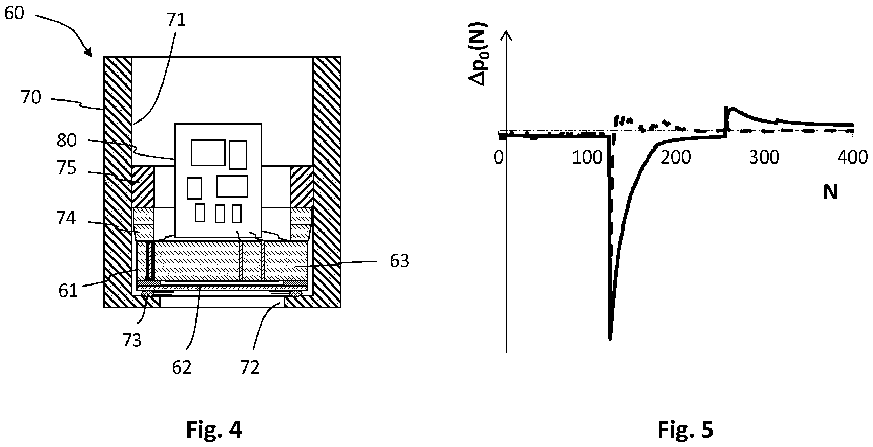

Das in Fig. 4 dargestellte Ausführungsbeispiel eines erfindungsgemäßen Druckmessaufnehmers 60 umfasst eine erfindungsgemäße Druckmesszelle 61 mit einer Messmembran 62 und einem Gegenkörper 63. Einen Temperaturmesswandler mit zwei Thermoelementen und einen kapazitiven Wandler, wobei die Einzelheiten zum Temperaturmesswandler und dem kapazitiven Wandler der zuvor diskutierten Ausführungsbeispiele hier entsprechend gelten.

Der Druckmessaufnehmer 60 umfasst weiterhin ein zylindrisches, metallisches Gehäuse 70, welches in seinem Innern eine Messzellenkammer 71 aufweist, die durch eine stirnflächenseitige Öffnung 72 mit einem Medium, dessen Druck zu messen ist, beaufschlagbar ist. Die Öffnung 72 ist von einem umlaufenden Dichtungssitz umgeben, der eine axiale Anschlagfläche bildet. Zwischen der Messmembran 62 der Druckmesszelle 61 und dem Dichtungssitz ist ein Dichtring 73 positioniert, gegen welche die Druckmesszelle axial eingespannt ist. Hierzu wirkt auf die Rückseite des Gegenkörpers 63 der der Messzelle 61 zunächst ein keramischer Stützring 74, der seinerseits rückseitig mit einem metallischen Schraubring 75 abgestützt ist, der in eine Gewinde in der Wand der Messzellenkammer 71 eingreift.

Der kapazitive Wandler und der Temperaturmesswandler sind an eine Betriebsschaltung 80 angeschlossen, wobei die Betriebsschaltung an oder nahe der Rückseite der Druckmesszelle 61 angeordnet ist. Die Betriebsschaltung wertet die Signale der Wandler aus und bereitet sie zur weiteren Verarbeitung auf. Die Betriebsschaltung 80 kann insbesondere einen ASIC aufweisen.

Zur weiteren Verarbeitung der Signale gehört insbesondere die Temperaturkompensation bzw. die Temperaturgradientenkompensation. Hierzu zeigt Fig. 5 einen exemplarischen Datensatz für einen anhand der Kapazitäten ermittelten Druckmesswert bei p=0 für einen positiven Temperatursprung und einen negativen Temperatursprung von 80 K über N = 400 Messpunkte im Abstand von jeweils 15 Sekunden. Die durchgezogene Linie zeigt den Druckmesswert ohne Temperaturkompensation. Die gestrichelte Linie zeigt den Druckmesswert mit Temperaturkompensation, wobei hierzu der Temperaturgradient zwischen der Mantelfläche der Fügestelle und der Rückseite der Druckmesszelle berücksichtigt wurde. Der in beide Thermoelemente eingehende erste Leiter war in diesem Fall die schirmende Beschichtung der Mantelfläche der Druckmesszelle. Im Ergebnis ist zu erkennen, dass die Nullpunktschwankungen des Drucksignals erheblich reduziert werden konnten.

## Patentansprüche

1. Druckmesszelle (1), umfassend:
einen keramischen Gegenkörper (3);
eine keramische Messmembran (2), die mit dem Gegenkörper (3) unter Bildung einer Messkammer zwischen dem Gegenkörper (3) und der Messmembran (2) mittels einer umlaufenden Fügestelle (4) druckdicht gefügt ist, wobei die Messmembran durch einen zu messenden Druck verformbar ist;
einen kapazitiven Wandler zum Wandeln einer druckabhängigen Verformung der Messmembran in ein elektrisches Signal;
und einen Temperaturmesswandler zum Bereitstellen mindestens eines von einer Temperatur oder einem Temperaturgradienten der Druckmesszelle abhängigen elektrischen Signals, **dadurch gekennzeichnet, dass** der Temperaturmesswandler mindestens ein erstes Thermoelement umfasst, das einen galvanischen Kontakt zwischen einem ersten Leiter (14), der ein erstes elektrisch leitendes Material umfasst, und einem zweiten Leiter (18) der mindestens ein zweites elektrisch leitendes Material umfasst, welches den ersten Leiter kontaktiert, aufweist,
wobei der Gegenkörper eine erste Materialstärke (hg) aufweist, wobei der galvanische Kontakt zwischen dem ersten Leiter und dem zweiten Leiter nicht mehr als 25% der ersten Materialstärke von einer dem Gegenkörper zugewandten Oberfläche der Messmembran beabstandet ist, und/oder
wobei die Fügestelle (4) eine zweite Materialstärke (hf) aufweist, wobei der galvanische Kontakt zwischen dem ersten Leiter und dem zweiten Leiter nicht mehr als das Zehnfache der zweiten Materialstärke von einer dem Gegenkörper zugewandten Oberfläche der Messmembran beabstandet ist.

2. Druckmesszelle nach Anspruch 1, wobei der Temperaturmesswandler weiterhin mindestens ein zweites Thermoelement, mit einem galvanischen Kontakt zwischen dem ersten Leiter und einem dritten Leiter, der mindestens ein drittes elektrisch leitendes Material umfasst, welches den ersten Leiter kontaktiert, aufweist.

3. Druckmesszelle nach Anspruch 2, wobei das erste Thermoelement und das zweite Thermoelement in Reihe geschaltet sind.

4. Druckmesszelle nach einem der vorhergehenden Ansprüche wobei das erste Material ausgewählt ist aus einer Liste, welche die folgenden Materialien umfasst: Metalle, metallische Legierungen, Metall-Chalkogenide, Metalloxide, und Si-Verbindungen.

5. Druckmesszelle nach einem der vorhergehenden Ansprüche, wobei das erste Material gegenüber Pt einen Seebeck-Koeffizienten aufweist, dessen Betrag nicht weniger als 2 µV/K beträgt, und/oder
wobei die Differenz zwischen dem Seebeck-Koeffizienten des ersten Materials und dem Seebeck-Koeffizienten des zweiten Materials einen Betrag aufweist, der nicht weniger als 2 µV/K beträgt.

6. Druckmesszelle nach einem der vorhergehenden Ansprüche, wobei der zweite Leiter mehrere Abschnitte unterschiedlicher elektrisch leitender Materialien aufweist, wobei vorzugsweise der Betrag der Differenz zwischen den Seebeck-Koeffizienten der jeweils benachbarten elektrisch leitenden Materialen des zweiten Leiters nicht mehr als die Hälfte, des Betrags der Differenz zwischen dem Seebeck-Koeffizienten des ersten Materials und dem Seebeck-Koeffizienten des zweiten Materials beträgt, und/oder
wobei der dritte Leiter mehrere Abschnitte unterschiedlicher elektrisch leitender Materialien aufweist, wobei vorzugsweise der Betrag der Differenz zwischen den Seebeck-Koeffizienten der elektrisch leitenden Materialen des dritten Leiters nicht mehr als die Hälfte, des Betrags der Differenz zwischen dem Seebeck-Koeffizienten des ersten Materials und dem Seebeck-Koeffizienten des dritten Materials beträgt.

7. Druckmesszelle nach einem der vorhergehenden Ansprüche, wobei die Fügestelle das zweite elektrisch leitende Material aufweist, wobei die Fügestelle einen Abschnitt des zweiten Leiters bildet.

8. Druckmesszelle nach Anspruch 2 oder einem davon abhängigen Anspruch, wobei der Gegenkörper eine membranseitige Stirnfläche, eine der Messmembran abgewandte, rückseitige Stirnfläche aufweist, die voneinander einen axialen Abstand (a) aufweisen wobei der erste Leiter sich über mindestens 80% des axialen Abstands (a) erstreckt.

9. Druckmesszelle nach Anspruch 8, wobei der erste Leiter entlang einer Mantelfläche des Gegenkörpers verläuft, die sich zwischen der membranseitigen Stirnfläche und der rückseitigen Stirnfläche erstreckt.

10. Druckmesszelle nach Anspruch 8 oder 9, wobei der galvanische Kontakt des ersten Thermoelements an einer Mantelfläche der Gegenkörpers angeordnet ist.

11. Druckmesszelle nach Anspruch 8, wobei der Gegenkörper eine durchgehende Bohrung oder ein Sackloch zwischen der membranseitigen Stirnfläche und der rückseitigen Stirnfläche aufweist, wobei der erste Leiter in der Bohrung oder dem Sackloch verläuft.

12. Druckmesszelle nach einem der Ansprüche 1 bis 9 und 11, wobei der galvanische Kontakt des ersten Thermoelements an einer der Messmembran zugewandten Oberfläche der Gegenkörpers angeordnet ist, wobei insbesondere die der Messmembran zugewandte Oberfläche des Gegenkörpers einen Radius aufweist, wobei der galvanische Kontakt nicht mehr als ein Fünftel des Radius von der Mantelfläche des Gegenkörpers beabstandet ist.

13. Druckmesszelle nach Anspruch 2 oder einem davon abhängigen Anspruch, wobei das zweite Thermoelement nicht mehr als 20% des axialen Abstands von der rückseitigen Stirnfläche beabstandet und bevorzugt auf der rückseitigen Stirnfläche angeordnet ist.

14. Druckmesszelle nach einem der vorhergehenden Ansprüche, wobei der kapazitive Wandler eine an der Messmembran angeordnete Membranelektrode (7) und mindestens eine an der membranseitigen Stirnfläche des Gegenkörper (2) angeordnete Gegenkörperelektrode (8, 9) aufweist, wobei die Kapazität zwischen der Membranelektrode (7) und der Gegenkörperelektrode (8, 9) von einer druckabhängigen Verformung der Messmembran abhängt wobei die Gegenkörperelektrode das erste oder das zweite Material aufweist.

15. Druckmesszelle nach einem der vorhergehenden Ansprüche, wobei zumindest ein Leiter des ersten und/oder zweiten Thermoelements durch Sputtern auf dem Gegenkörper abgeschieden ist.

16. Druckmessaufnehmer, umfassend:
eine Druckmesszelle nach einem der vorhergehenden Ansprüche; und
ein Gehäuse,
wobei das Gehäuse in seinem Innern eine Messzellenkammer aufweist, in welcher die Druckmesszelle angeordnet ist, wobei das Gehäuse eine Medienöffnung aufweist, wobei die die Messmembran der Medienöffnung zugewandt und über die Medienöffnung mit einem Medium dessen Druck zu messen ist, beaufschlagbar ist.

## Claims

1. Pressure measuring cell (1), comprising:
a ceramic counter-body (3) ;
a ceramic measuring membrane (2), which is joined, in a pressure-tight manner, to the counter-body (3), forming a measuring chamber between the counter-body (3) and the measuring membrane (2) by means of a circumferential joint (4), wherein the measuring membrane can be deformed by a pressure to be measured;
a capacitive converter designed to convert a pressure-dependent deformation of the measuring membrane into an electrical signal;
and a temperature transducer to provide at least an electrical signal that depends on a temperature or a temperature gradient of the pressure measuring cell, **characterized in that** the temperature transducer comprises at least a first thermocouple, which features a galvanic contact between a first conductor (14), which comprises a first electroconductive material, and a second conductor (18), which comprises at least a second electroconductive material, said second conductor being in contact with the first conductor,
wherein the counter-body has a first material thickness (hg), wherein the galvanic contact between the first conductor and the second conductor is not spaced by more than 25 % of the first material thickness away from a surface of the measuring membrane facing towards the counter-body, and/or
wherein the joint (4) has a second material thickness (hf), wherein the galvanic contact between the first conductor and the second conductor is not spaced by more than 10 times the second material thickness away from a surface of the measuring membrane facing towards the counter-body.

2. Pressure measuring cell as claimed in Claim 1, wherein the temperature transducer further comprises at least a second thermocouple, with a galvanic contact between the first conductor and a third conductor, which comprises at least a third electroconductive material, which is in contact with the first conductor.

3. Pressure measuring cell as claimed in Claim 2, wherein the first thermocouple and the second thermocouple are switched in series.

4. Pressure measuring cell as claimed in one of the previous claims, wherein the first material is selected from a list which comprises the following materials: metals, metal alloys, metal chalcogenides, metal oxides and Si compounds.

5. Pressure measuring cell as claimed in one of the previous claims, wherein the first material has a Seebeck coefficient in relation to Pt, whose value is not less than 2 µV/K, and/or
wherein the difference between the Seebeck coefficient of the first material and the Seebeck coefficient of the second material is equal to a value that is not less than 2 µV/K.

6. Pressure measuring cell as claimed in one of the previous claims, wherein the second conductor has multiple sections of different electroconductive materials, wherein preferably the value of the difference between the Seebeck coefficients of the adjacent electroconductive materials of the second conductor is not more than half of the value of the difference between the Seebeck coefficient of the first material and the Seebeck coefficient of the second material, and/or
wherein the third conductor has multiple sections of different electroconductive materials, wherein preferably the value of the difference between the Seebeck coefficients of the electroconductive materials of the third conductor is not more than half of the value of the difference between the Seebeck coefficient of the first material and the Seebeck coefficient of the third material.

7. Pressure measuring cell as claimed in one of the previous claims, wherein the joint features the second electroconductive material, wherein the joint forms a section of the second conductor.

8. Pressure measuring cell as claimed in Claim 2 or a dependent claim, wherein the counter-body has a front surface on the membrane side and a front surface on the rear side facing away from the measuring membrane, wherein said surfaces have an axial distance (a) in relation to one another and wherein the first conductor extends over at least 80 % of the axial distance (a).

9. Pressure measuring cell as claimed in Claim 8, wherein the first conductor runs along a lateral surface of the counter-body, wherein said surface extends between the front surface on the membrane side and the front surface on the rear side.

10. Pressure measuring cell as claimed in Claim 8 or 9, wherein the galvanic contact of the first thermocouple is arranged on a lateral surface of the counter-body.

11. Pressure measuring cell as claimed in Claim 8, wherein the counter-body features a through borehole or a blind hole between the front surface on the membrane side and the front surface on the rear side, wherein the first conductor extends into the borehole or blind hole.

12. Pressure measuring cell as claimed in one of the Claims 1 to 9 and 11, wherein the galvanic contact of the first thermocouple is arranged on a surface of the counter-body facing towards the measuring membrane, wherein, in particular, the surface of the counter-body facing towards the measuring membrane has a radius, wherein the galvanic contact is spaced by not more than a fifth of the radius from the lateral surface of the counter-body.

13. Pressure measuring cell as claimed in Claim 2 or a dependent claim, wherein the second thermocouple is spaced by not more than 20 % of the axial distance from the front surface on the rear side and preferably arranged on the front surface on the rear side.

14. Pressure measuring cell as claimed in one of the previous claims, wherein the capacitive converter has a membrane electrode (7) arranged on the measuring membrane and at least a counter-body electrode (8, 9) arranged on the membrane-side front surface of the counter-body (2), wherein the capacity between the membrane electrode (7) and the counter-body electrode (8, 9) depends on a pressure-dependent deformation of the measuring membrane, wherein the counter-body electrode features the first or the second material.

15. Pressure measuring cell as claimed in one of the previous claims, wherein at least a conductor of the first and/or second thermocouple is deposited on the counter-body via sputtering.

16. Pressure sensor, comprising:
a pressure measuring cell as claimed in one of the previous claims; and
a housing,
wherein on the inside of said housing the housing has a measuring cell chamber in which the pressure measuring cell is arranged, wherein the housing has a medium opening wherein the measuring membrane faces towards the medium opening and wherein the membrane can be exposed to a medium whose pressure is to be measured via the medium opening.

## Revendications

1. Cellule de mesure de pression (1), comprenant :
un contre-corps céramique (3) ;
une membrane de mesure céramique (2), laquelle est reliée de façon étanche à la pression avec le contre-corps (3) en formant une chambre de mesure entre le contre-corps (3) et la membrane de mesure (2) au moyen d'un joint périphérique (4), la membrane de mesure pouvant être déformée par une pression à mesurer ;
un convertisseur capacitif destiné à convertir une déformation fonction de la pression de la membrane de mesure en un signal électrique ;
et un transducteur de température destiné à mettre à disposition au moins un signal électrique dépendant d'une température ou d'un gradient de température de la cellule de mesure de pression, **caractérisée en ce que** le transducteur de température comprend au moins un premier thermocouple, lequel présente un contact galvanique entre un premier conducteur (14), qui comprend un premier matériau électroconducteur, et un deuxième conducteur (18), qui comprend au moins un deuxième matériau électroconducteur, lequel deuxième conducteur est en contact avec le premier conducteur,
le contre-corps présentant une première épaisseur de matériau (hg), le contact galvanique entre le premier conducteur et le deuxième conducteur n'étant pas espacé de plus de 25 % de la première épaisseur de matériau par rapport à la surface de le membrane faisant face au contre-corps, et/ou
le joint (4) présentant une deuxième épaisseur de matériau (hf), le contact galvanique entre le premier conducteur et le deuxième conducteur n'étant pas espacé de plus de 10 fois la deuxième épaisseur de matériau par rapport à la surface de le membrane faisant face au contre-corps.

2. Cellule de mesure de pression selon la revendication 1, pour laquelle le convertisseur de mesure comprend en outre au moins un deuxième thermocouple, avec un contact galvanique entre le premier conducteur et un troisième conducteur, qui comprend au moins un troisième matériau électroconducteur, lequel est en contact avec le premier conducteur.

3. Cellule de mesure de pression selon la revendication 2, pour laquelle le premier thermocouple et le deuxième thermocouple sont couplés en série.

4. Cellule de mesure de pression selon l'une des revendications précédentes, pour laquelle le premier matériau est sélectionné à partir d'une liste, qui comprend les matériaux suivants : métaux, alliages métalliques, chalcogénure métallique, oxyde métallique et composés de Si.

5. Cellule de mesure de pression selon l'une des revendications précédentes, pour laquelle le premier matériau présente un coefficient de Seebeck par rapport au Pt, dont la valeur n'est pas inférieure à 2 µV/K, et/ou
pour laquelle la différence entre le coefficient de Seebeck du premier matériau et le coefficient de Seebeck du deuxième matériau est égale à une valeur qui n'est pas inférieure à 2 µV/K.

6. Cellule de mesure de pression selon l'une des revendications précédentes, pour laquelle le deuxième conducteur présente plusieurs sections de matériaux électroconducteurs différents, la valeur de la différence entre les coefficients de Seebeck des matériaux électroconducteurs adjacents du deuxième conducteur ne représentant de préférence pas plus de la moitié de la valeur de la différence entre le coefficient de Seebeck du premier matériau et le coefficient de Seebeck du deuxième matériau, et/ou
pour laquelle le troisième conducteur présente plusieurs sections de matériaux électroconducteurs différents, la valeur de la différence entre les coefficients de Seebeck des matériaux électroconducteurs du troisième conducteur ne représentant de préférence pas plus de la moitié de la valeur de la différence entre le coefficient de Seebeck du premier matériau et le coefficient de Seebeck du troisième matériau.

7. Cellule de mesure de pression selon l'une des revendications précédentes, pour laquelle le joint comprend le deuxième matériau électroconducteur, le joint formant une section du deuxième conducteur.

8. Cellule de mesure de pression selon la revendication 2 ou une revendication en dépendant, pour laquelle le contre-corps comporte une surface frontale côté membrane, une surface frontale côté arrière, située à l'opposé de la membrane de mesure, lesquelles surfaces présentent une distance axiale (a) l'une de l'autre, le premier conducteur s'étendant sur au moins 80 % de la distance axiale (a).

9. Cellule de mesure de pression selon la revendication 8, pour laquelle le premier conducteur se déploie le long d'une surface latérale du contre-corps, laquelle surface s'étend entre la surface frontale côté membrane et la surface frontale côté arrière.

10. Cellule de mesure de pression selon la revendication 8 ou 9, pour laquelle le contact galvanique du premier thermocouple est disposé sur une surface latérale du contre-corps.

11. Cellule de mesure de pression selon la revendication 8, pour laquelle le contre-corps présente un perçage traversant ou un trou borgne entre la surface frontale côté membrane et la surface frontale côté arrière, le premier conducteur s'étendant dans le perçage ou dans le trou borgne.

12. Cellule de mesure de pression selon l'une des revendications 1 à 9 et 11, pour laquelle le contact galvanique du premier thermocouple est disposé sur une surface de contre-corps faisant face à la membrane de mesure, la surface de contre-corps faisant face à la membrane de mesure présentant notamment un rayon, le contact galvanique n'étant pas espacé de plus d'un cinquième du rayon par rapport à la surface latérale du contre-corps.

13. Cellule de mesure de pression selon la revendication 2 ou une revendication en dépendant, pour laquelle le deuxième thermocouple n'est pas espacé de plus de 20 % de la distance axiale par rapport à la surface frontale arrière et disposé de préférence sur la surface frontale arrière.

14. Cellule de mesure de pression selon l'une des revendications précédentes, pour laquelle le convertisseur capacitif présente une électrode de membrane (7) disposée sur la membrane de mesure et au moins une électrode de contre-corps (8, 9) disposée sur une surface frontale côté membrane du contre-corps (2), la capacité entre l'électrode de membrane (7) et l'électrode de contre-corps (8, 9) dépendant d'une déformation fonction de la pression de la membrane de mesure, l'électrode de contre-corps présentant le premier ou le deuxième matériau.

15. Cellule de mesure de pression selon l'une des revendications précédentes, pour laquelle au moins un conducteur du premier et/ou du deuxième thermocouple sont déposés par pulvérisation sur le contre-corps.

16. Transmetteur de pression, comprenant :
une cellule de mesure de pression selon l'une des revendications précédentes ; et
un boîtier,
le boîtier présentant en son intérieur une chambre de cellule de mesure, dans laquelle est disposée la cellule de mesure de pression, le boîtier présentant une ouverture de produit, la membrane de mesure faisant face à l'ouverture de produit et laquelle membrane pouvant être soumise, à travers l'ouverture de produit, à un produit dont la pression doit être mesurée.
